# EUROPEAN PATENT SPECIFICATION

(11) **EP 4 241 868 B1**
(45) Date of publication and mention of the grant of the patent: **01.05.2024**
(21) Application number: 22161621.2
(22) Date of filing: 11.03.2022
(51) Int. Cl.: B01D 46/00, B01D 46/52, B01D 46/64

(54) **FILTER ELEMENT, CARTRIDGE AND FILTER SYSTEM**
FILTERELEMENT, KARTUSCHE UND FILTERSYSTEM
ÉLÉMENT DE FILTRE, CARTOUCHE ET SYSTÈME DE FILTRE

(43) Date of publication of application: 13.09.2023
(73) Proprietor: MANN+HUMMEL LIFE SCIENCES & ENVIRONMENT HOLDING SINGAPORE PTE. LTD., Singapore 139234 (SG)
(72) Inventor: KOEHN, Jörg, 45138 Essen (DE)
(74) Representative: Mann + Hummel Intellectual Property

(56) References cited:
- WO-A1-2021/185477
- JP-U- S57 152 925
- US-A- 5 395 411
- N N: "AFS - starke Leistung, reine Luft Luftreinigungsgeräte und -Anlagen zur Absaugung von Öl- und Emulsionsnebel, lufttechnischer Anlagenbau, raumlufttechnische Anlagen, betrieblicher Umweltschutz", , 1 January 2018 (2018-01-01), pages 1-16, XP055907856, Retrieved from the Internet: URL:https://www.afs-airfilter.de/fileadmin /Download/Prospekt/AFS-Prospekt_2018.pdf [retrieved on 2022-04-01]
- N N: "IFMC 500", , 1 January 2017 (2017-01-01), pages 1-1, XP055907858, Retrieved from the Internet: URL:https://www.ifs-industriefilter.de/fil eadmin/upload/Produktdatenblaetter_DE_ENG/ Industriefilter_mechanisch/Produktblatt_IF MC_500_01.pdf [retrieved on 2022-04-01]

## Description

### Technical field

The present invention relates to a filter element according to the preamble of claim 1. The present invention further relates to a cartridge according to the preamble of claim 9 and to a filter system according to the preamble of claim 13.

The present invention relates in particular to a coalescence filter element for use in an industrial filter system, for example for use in at least one extraction or exhaust chamber of at least one tooling machine. Said tooling machine may be designed for processing processes such as cutting, shaping, rolling and pressing, grinding and scarfing.

The filter element of the present invention is designed for separating a dispersed fluid phase, in particular oil aerosols, from a continuous phase of a gas mixture, in particular for separating oil aerosols from raw gas, e.g. from the exhaust air of the tooling machine.

### Background and prior art

In the case of tooling machines, e.g. of cutting machines, cooling lubricant is applied to the tooling edge, e.g. to the cutting edge, during the tooling process, e.g. during removal of material. This cooling lubricant evaporates at the tooling edge or is atomized by the rotary movements of the tooling edge, wherein a dispersed fluid phase, in particular an oil aerosol, is produced.

In order to prevent the dispersed fluid phase from escaping out of the extraction or exhaust chamber of the tooling machine in an uncontrolled manner, the extraction or exhaust chamber is sucked off and a filter element is used to separate the dispersed fluid phase from the extracted exhaust air. This filter element can be associated with one tooling machine or with a plurality of tooling machines.

Prior art document WO 2021 18 54 77 A1 describes a filter element according to the preamble of claim 1. This filter element comprises a folded coalescing filter medium and separators being arranged in the folds. These separators are corrugated in a sinusoidal or zigzag-shaped manner and are located in between adjacent folds for spacing the folds apart from one another in order to prevent collapse of the folds in the event of pressure differences. According to the teaching of WO 2021 18 54 77 A1 the gas mixture flows vertically through the filter element and the corrugations of the separators are aligned vertically. This means, that hollow channels, being formed by the corrugated separators, are arranged vertically, i.e. perpendicularly to the horizontal axis of the filter element, and the gas mixture flowing through the filter element passes through these vertical channels. The filter system described in WO 2021 18 54 77 A1 comprises a plurality of filter elements being arranged one upon the other as depicted in figure 10 of WO 2021 18 54 77 A1. However, in some cases there is not enough space to arrange such a vertical flowed through filter system in connection with the extraction or exhaust chamber of a tooling machine. Therefore, there is a demand for a coalescer filter element which can be flowed through horizontally by the gas mixture.

Filter elements designed for a horizontal gas flow are depicted in prior art document "AFS - starke Leistung, reine Luft; Luftreinigungsgeräte und -Anlagen zur Absaugung von Öl- und Emulsionsnebel, lufttechnischer Anlagenbau, raumlufttechnische Anlagen, betrieblicher Umweltschutz" edited by AFS Airfilter Systeme GmbH, Am Richtbach 14, 74547 Übrigshausen, 2018, which can be downloaded by the link: https://www.afs-airfilter.de/fileadmin/Download/Prospekt/AFS-Prospekt 2018.pdf.

Moreover, a filter system designed for being flowed through horizontally is disclosed in the prior art document "IFMC 500" edited by ifs Industriefilter Service GmbH, Vogelsbitze 12, D-53604 Bad Honnef, which can be downloaded by the link: https://www.ifs-industriefilter.de/fileadmin/upload/Produktdatenblaetter DE ENG/lndustriefilter mec hanisch/Produktblatt IFMC 500 01.pdf.

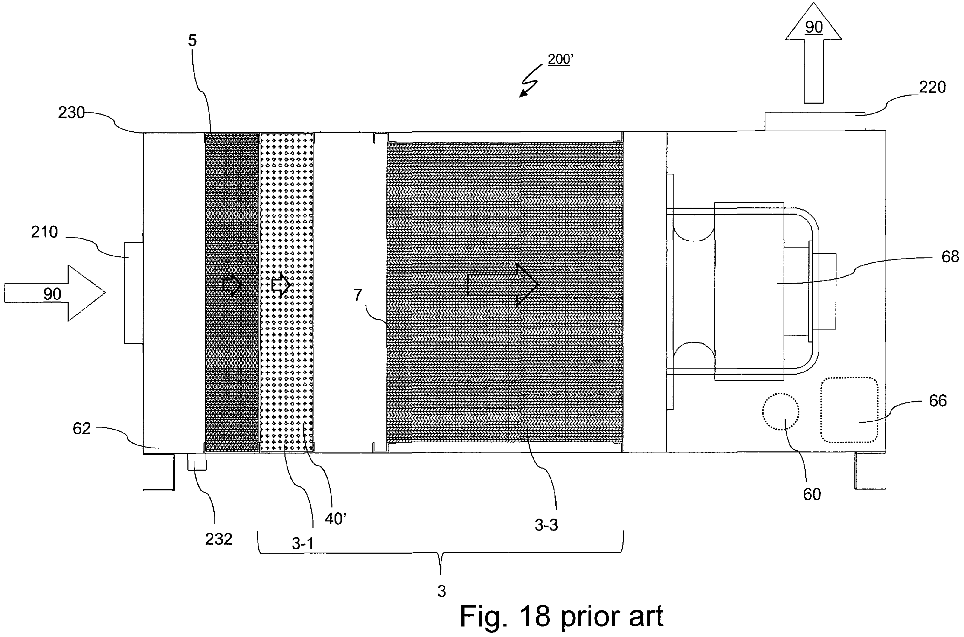

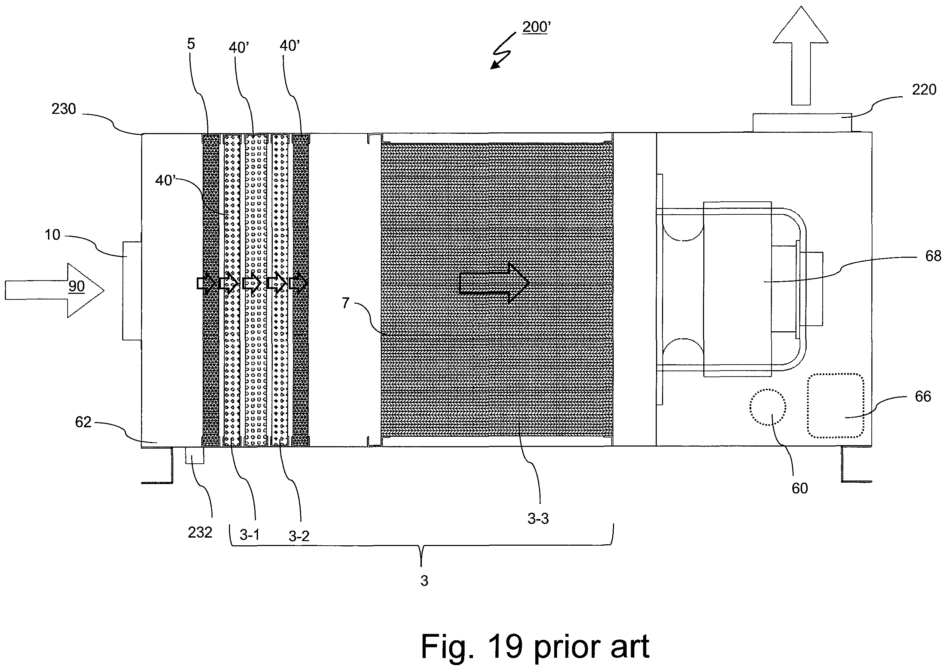

The main stage of these filter systems for horizontal flow of the gas mixture comprises a plurality of filter elements in the form of filter mats being arranged in parallel in a filter cassette(cf. figures 18 and 19). Such filter mats may be e.g. at least one metal mash mat, at least one coalescing filter medium mat and at least one further filter tissue mat. Downstream of these filter mats a fine filter element, for example a H[igh-]Efficiency ]P[articulate ]A[ir/Arrestance] filter, is arranged. To obtain a sufficient degree of purity so that the gas mixture can be fed to the fine filter, these filter systems require multiple filter mats to pre-clean the gas mixture.

### Disclosure of the present invention: problem, solution, advantages

Starting from the disadvantages and shortcomings as described above and taking the prior art as discussed into account, an object of the present invention is to further develop a filter element of the kind as described in the technical field, a cartridge of the kind in the technical field as well as a filter system of the kind as described in the technical field, in such way that smaller dimensions, lighter weight and lower manufacturing costs are required.

The object of the present invention is achieved by a filter element comprising the features of claim 1, by a cartridge comprising the features of claim 9 as well as by a filter system comprising the features of claim 13. Advantageous embodiments and expedient improvements of the present invention are disclosed in the respective dependent claims.

The present invention is principally based on the idea to provide a filter element of the kind as described in the technical field with horizontal flow, i.e. the filter element is flowed through by the gas mixture along its horizontal axis. This horizontal flow allows smaller dimensions, lower weight and lower manufacturing costs of the filter element.

To make the best possible use of the filter element's surface area through which the air flows horizontally and to achieve a high separation efficiency, the longitudinal surfaces of the folds or pleats extend along the horizontal axis of the filter element.

Compared to the filter element for horizontal flow known from the prior art, the filter element of the present invention has a significant higher efficiency for separating fluid, because the flow rate of the gas mixture through the folded or pleated coalescing filter medium is much lower than flow rate of through a filter mat.

To ensure optimized flow of the gas mixture and drainage of the fluid being separated by the filter element, the corrugation depth axis is disposed at an angle offset to the vertical axis of the filter element as well as offset to the depth axis of the filter element as well as offset to the horizontal axis of the filter element. With other words, the corrugation depth axis is arranged in an oblique angle to an axis through the length of the fold for preventing an overload of the filter element.

For enhancing the fluid being separated from the gas mixture to be drained out of the filter element by gravity as well as for enhancing the distribution of the gas mixture to the entire surface of the coalescence medium, each corrugation preferably extends across the depth of the fold in such way, that at least one hollow channel is provided through the depth of the fold. In this context, the corrugated separator advantageously extends in a planar manner between the longitudinal surfaces of the coalescence medium fold in such a way that at least one hollow channel is formed between the fold tip and the fold trough of the coalescence medium, wherein this hollow channel is designed for guiding the gas mixture and for draining the fluid being separated by the filter element.

According to a preferred embodiment of the invention, the corrugation depth axis is disposed at an angle of about 20 degrees to about 70 degrees, in particular of about 25 degrees to about 55 degrees, for example of about 30 degrees, to the vertical axis of the filter element. An angle of 30 degrees is optimal regarding stability of the corrugated separator and its capability to withstand horizontal and vertical forces supplied to the corrugated separator during use of the filter element.

A corrugated separator located in between adjacent longitudinal surfaces of the fold of the coalescing filter medium may be located at a raw side of the coalescing filter medium. A corrugated separator located in between adjacent longitudinal surfaces of the next fold of the coalescing filter medium may be located at a clean side of the coalescing filter medium. The corrugated separator may have a corrugation depth axis such that the hollow channel is angled to optimize drainage of fluid separated by the corrugated separator. The hollow channel of the corrugated separator at the raw side may be angled to optimize drainage of the separated fluid into frame drain opening(s) in the frame. The hollow channel of the corrugated separator at the clean side may be angled to optimize flow of the clean gas having essentially no dispersed fluid phase to the filter system outlet.

To allow the gas mixture to stream through the corrugated separator and to allow the gas mixture to inflow into the entire area of the filter element, the corrugations are preferably comprising at least one corrugated separator opening, in particular at least one perforation or at least one vent hole, at corrugation surfaces facing each other. Preferably the corrugations comprise multiple corrugated separator openings distributed over the corrugation surfaces. The corrugated separator openings may be arranged at respective opposite sides of the corrugations in such way, that the gas mixture flows along the horizontal axis of the filter element through corrugated separator openings facing each other. With other words, to ensure optimized flow and drainage, according to a preferable embodiment of the invention, the corrugations have at least one corrugated separator opening on corrugation sides facing each other. The corrugated separator openings preferably act on both sides of the corrugations.

The corrugated separator may be bonded to the fold to stabilize it to the coalescing filter medium.

Alternatively, to stabilize the corrugated separator to the coalescing filter medium, the coalescing filter medium may be arranged in at least one frame
- being assigned to the cartridge,
- being designed for receiving the coalescing filter medium with the corrugated separator located in the fold and
- being in dimension slightly smaller than the coalescing filter medium with the corrugated separator located in the fold such that, the filter element is held within the frame by means of a press fit. For example, the coalescing filter medium, which may be slightly more than 600mm in a dimension, is compressed within the frame, which may have a dimension of 600mm x 600mm; thus, the corrugated separators are also compressed within this setup, therefore bonding is not needed or used in this embodiment.

The corrugated separator may essentially consist of at least one metal material, in particular at least one material comprising aluminum, e.g. steel, such as unalloyed structural steel of grade S235.

Alternatively, to allow the corrugated separator to be disposed in an environmental and cost saving manner, it may essentially consist of at least one combustible material, in particular combustible synthetic material and/or combustible plant fibre material, e.g. cellulose fibre material.

The coalescing filter medium may essentially consist of at least one fibrous material, such as synthetic fibre material and/or at least one glass fibre material and/or at least one plant fibre material.

In connection herewith or independently thereof, the cartridge of the present invention may comprise a or a plurality of filter element(s) mounted in or within the frame. To permit the gas mixture to be exposed to the largest possible amount of the filter element's surface area, sides of the filter element may be supported by the frame. Fold tips of the filter element may be supported by the frame.

For admitting the gas mixture, in particular the raw gas, into the cartridge, the frame comprises at least one fluid inlet opening or fluid inlet area. Where at least one fluid inlet opening is present, the fluid inlet opening(s) lead to the fluid inlet area at an inflow or raw side of the filter element. For draining fluid being separated by the filter element, the frame comprises at least one frame drain opening. For preventing a flow of the gas mixture through the frame drain opening(s), instead of a post-cartridge stage, a post-separator stage or the filter system outlet, the total area of the frame drain opening(s) is preferably smaller than the total area of the fluid inlet opening(s) or the total fluid inlet area.

According to a preferred embodiment of the invention, each fold comprises two longitudinal surfaces being connected by a fold tip and comprising an open fold trough opposed to the fold tip. An area between two longitudinal surfaces being connected by a fold tip facing an inflow side for the gas mixture forms the clean side of the coalescing filter medium and an area between two longitudinal surfaces being connected by a fold tip facing an outflow side for the gas mixture forms the raw side of the coalescing filter medium. To avoid a reflux of the drained fluid into the filter element, the frame drain opening is preferably only arranged in the area of the raw side of the coalescing filter medium.

Moreover, to prevent a reflux of the drained fluid into the filter element, the frame drain openings are preferably arranged in flow direction of the gas mixture only in the first two thirds of the area of the horizontal ground area.

A fluid reservoir formed by the filter system housing may be in fluid communication with the ground area to collect the fluid drained through the frame drain opening. The fluid reservoir may be in fluid communication with the fluid inlet opening or fluid inlet area. Where a ventilator is located after the cartridge or separator, the ventilator may generate a negative pressure to provide a horizontal flow pulling raw gas through the cartridge and clean gas subsequently through any post-cartridge stage to the filter system outlet. Alternatively, where a ventilator is located before the cartridge, the ventilator may generate a positive pressure to provide a horizontal flow pushing raw gas through the cartridge and clean gas subsequently through any post-cartridge stage to the filter system outlet. The fluid reservoir may therefore be subject to the pressure at the fluid inlet opening or fluid inlet area.

As mentioned above, fluid separated by passing the corrugated separator at the raw side of the coalescing filter medium may be drained out of the frame drain opening arranged at the raw side or in the first two thirds of the area of the horizontal ground area. Any fluid still entrained in the continuous gas phase may be further separated by the coalescing filter medium, such that a continuous gas phase or clean gas phase having essentially no dispersed fluid phase may be obtained at the outflow side of the filter element. No drain openings may be arranged in the area of the clean side of the coalescing filter medium or in the last third of the area of the horizontal ground area, so that the drained fluid collected, e.g., in the fluid reservoir, does not flow back into the clean side through such openings. No drain openings may be arranged in the area of the clean side of the coalescing filter medium or in the last third of the area of the horizontal ground area to prevent any pressure generated by the ventilator from causing a reflux of the collected fluid, e.g., in the fluid reservoir, at the clean side.

The fluid reservoir may be sealed or physically separated from any post-cartridge stage to prevent any reflux of the drained fluid into the post-cartridge stage. The post-cartridge stage may be installed slightly higher than the cartridge in order to keep possible residual dispersed fluid phase or moisture away from the post-cartridge stage. The fluid reservoir may comprise at least one fluid outlet to remove collected fluid out of the filter system housing.

The present invention further relates to the use of the filter element as described above in a cartridge as described above or a filter system as described above.

### Brief explanation of the drawings

As already discussed above, there are several options to embody as well as to improve the teaching of the present invention in an advantageous manner. To this aim, reference is made to the claims respectively dependent on claim 1 and claim 9; further improvements, features and advantages of the present invention are explained below in more detail with reference to two preferred embodiments by way of example and to the accompanying drawings where
- Fig. 1: shows an embodiment of a filter system according to the present invention, said filter system comprising a cartridge according to a first exemplary embodiment of the present invention, wherein said cartridge comprises a filter element according to an exemplary embodiment of the present invention;
- Fig. 2: shows a side view of the filter system of Fig. 1 in view of section A-A depicted in Fig. 3;
- Fig. 3: shows a top view of the filter system of Fig. 1 in view of section B-B of Fig. 2;
- Fig. 4: shows a detailed view of area 84 depicted in Figure 2;
- Fig. 5: shows a detailed view of area 80 depicted in Figure 3;
- Fig. 6: shows a detailed view of area 82 depicted in Figure 3, where drain openings 53 are shown through a transparent view of coalescence medium 40;
- Fig. 7: shows a detailed view of area 84 depicted in Figure 2;
- Fig. 8: shows a detailed view of area 86 depicted in Figure 2;
- Fig. 9: shows in detail the filter element of Fig. 1;
- Fig. 10: shows in detail the cartridge of Fig. 1, where drain openings 53 are shown through a transparent view of coalescence medium 40;
- Fig. 11: shows in detail the corrugated separator of Fig. 1;
- Fig. 12: shows in detail the ground area of the frame of the cartridge of Fig. 1;
- Fig. 13: shows in detail the corrugated separator of Fig. 1
- Fig. 14: shows a cartridge according to a second exemplary embodiment of the present invention;
- Fig. 15: shows in detail the flow of the gas mixture through the cartridge of Figure 14 as well as the corrugated separator of the cartridge of Fig. 14;
- Fig. 16: shows in detail the filter element of the cartridge of Fig. 14 or of the cartridge of Fig. 1;
- Fig. 17: shows in detail the drainage of the separated fluid out of the cartridge of Fig. 14;
- Fig. 18: shows a first embodiment of a filter system according to prior art being designed for a horizontal gas flow; and
- Fig. 19: shows a second embodiment of a filter system according to prior art being designed for a horizontal gas flow.

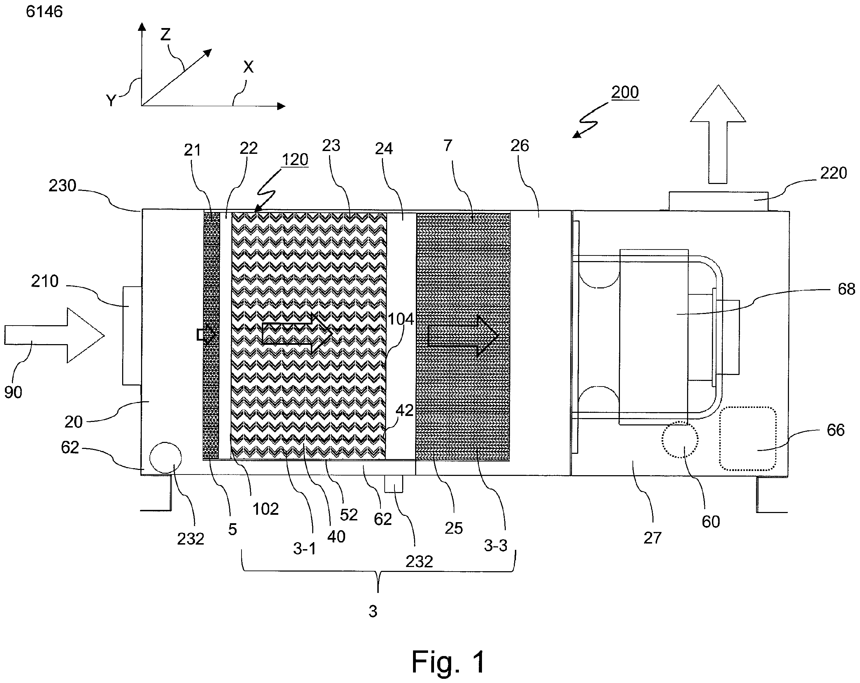

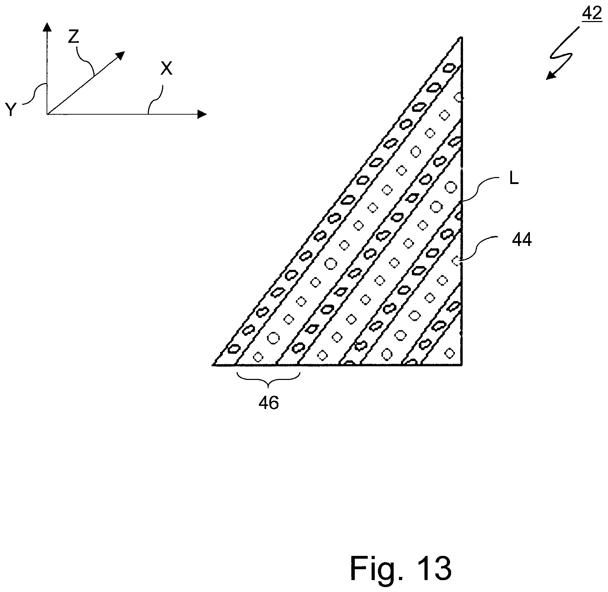

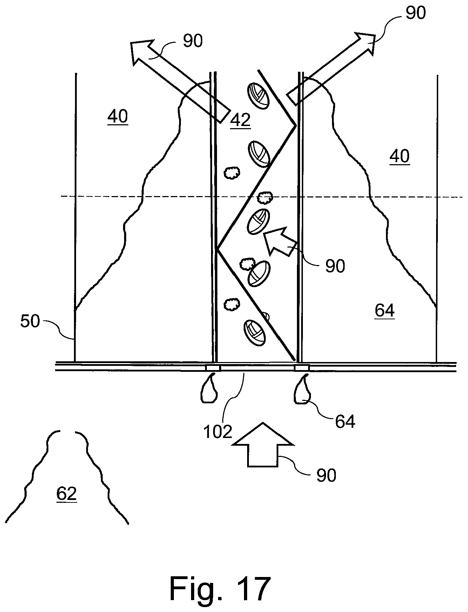

The same reference numerals are used for corresponding parts in Fig. 1 to Fig. 19.

### Best way of embodying the present invention

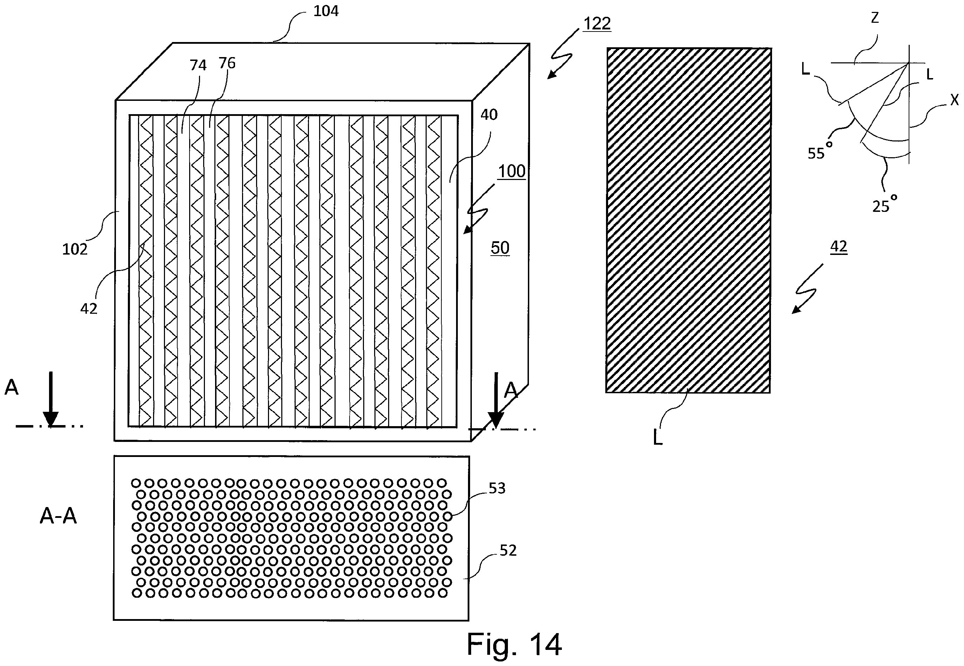

In order to avoid unnecessary repetitions, the following description regarding the embodiments, characteristics and advantages of the present invention relates (unless stated otherwise)
- to the first embodiment of the cartridge 120 according to the present invention (cf. Fig. 1) as well as
- to the second embodiment of the cartridge 122 according to the present invention (cf. Figure 14).

In figure 1 is shown an embodiment of a horizontal flow coalescing filter system 200 comprising a pre-separator stage 5, a first embodiment of a cartridge 120 according to the the present invention and a housing 230 to house the pre-separator stage 5 and the cartridge 120. The filter system 200 may comprise a housing with multiple housing sections 20, 21, 22, 23, 24, 25, 26, 27, e.g.
- a first housing section 20, comprising a filter system inlet 210,
- a second housing section 21 and a third housing section 22 being arranged to a pre-separator stage,
- a fourth housing section 23, a fifth housing section 24 and a sixth housing section 25 being arranged to a main-separator stage,
- a seventh housing section 26, being arranged to a post-separator stage and
- an eighth housing section 27, comprising a filter system outlet 220 (cf. figure 1).

The filter element 100 depicted in Figures 1 to 17 is designed for being flowed through by the gas mixture along the horizontal axis X of the filter element 100 and for separating a dispersed fluid phase from a continuous phase of a gas mixture. It comprises
- a vertical axis Y, a horizontal axis X and a depth axis Z perpendicularly to each other,
- a coalescing filter medium 40 being folded in a sinusoidal or zigzagged manner forming multiple folds, each fold having a length 70 and a depth 72, and
- corrugated separators 42, wherein
- at least one of the corrugated separators 42 is assigned to each fold,
- each corrugated separator 42 comprises sinusoidal or zigzag-shaped corrugations 46 located in between adjacent longitudinal surfaces 74, 76 of the fold assigned to the corrugated separator 42. With other words, each corrugation comprises a corrugation vertex being in contact with a first longitudinal surface of the adjacent layers of the fold and a corrugation foot being in contact with a second longitudinal surface of the adjacent layers of the fold. The heights of the corrugations extend perpendicularly to the longitudinal surfaces 74, 76 of the fold. The longitudinal surfaces 74, 76 of the folds extend along the horizontal axis X of the filter element 100.

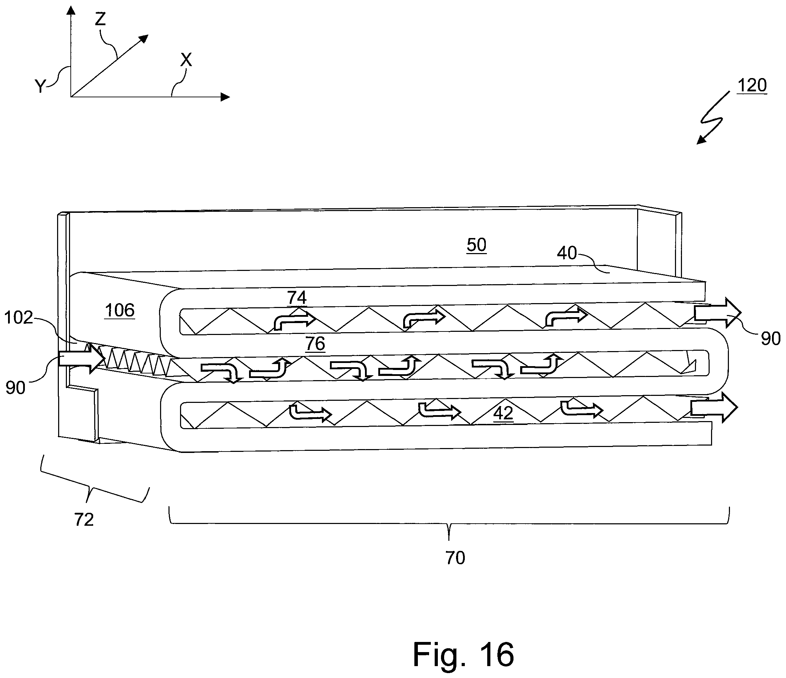

The second embodiment of the cartridge 122 shown in figure 14 differs from the first embodiment of the cartridge 120 shown in figure 1 only in the orientation of the folds of the coalescing filter medium 40. As depicted in figures 1 and 16, the folds of the coalescing filter medium 40 may be arranged in the cartridge 120 lying horizontally, i.e. the longitudinal surfaces 74, 76 of the folds may extend between the horizontal axis X and the depth axis Z of the filter element 100. Alternatively, as depicted in figure 14, the folds of the coalescing filter medium 40 may be arranged in the cartridge standing horizontally, i.e. the longitudinal surfaces 74, 76 of the folds may extend between the vertical axis Y and the horizontal axis X of the filter element 100.

Each corrugation 46 of the corrugated separators 42 comprises a corrugation depth axis L extending across the depth 72 of the fold. Said corrugation depth axis L is disposed at an angle offset to the vertical axis Y of the filter element 100 as well as offset to the depth axis Z of the filter element 100 as well as offset to the horizontal axis X of the filter element 100.

With other words, each corrugated separator 42 is disposed across the depth of the fold being assigned to the respective corrugated separator 42 thus that its corrugation vertexes form corrugation vertex lines extending through the depth of the fold and its corrugation feet form corrugation feet lines extending through the depth of the fold, wherein the corrugation vertex lines and the corrugation feet lines are disposed at an slanted angle offset to an axis through the length of the fold being assigned to the respective corrugated separator 42.

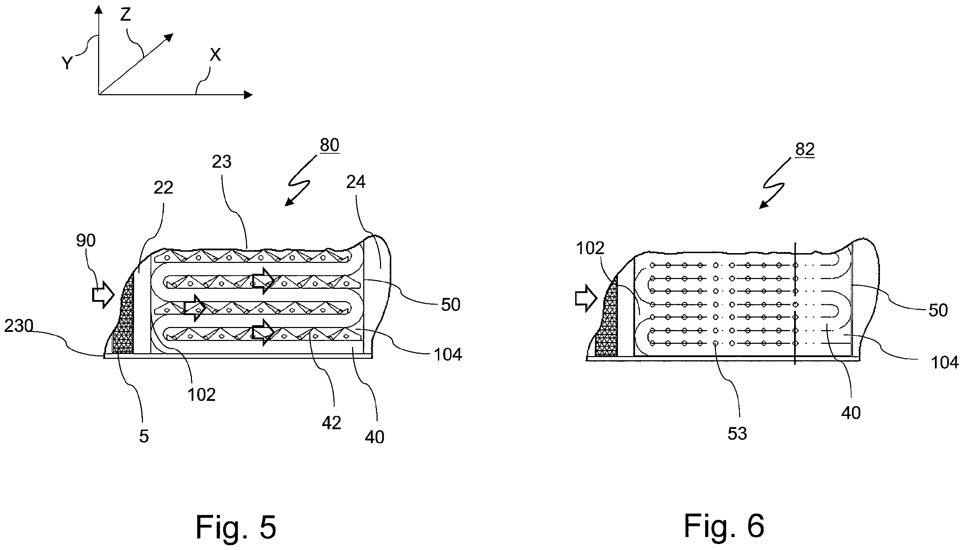

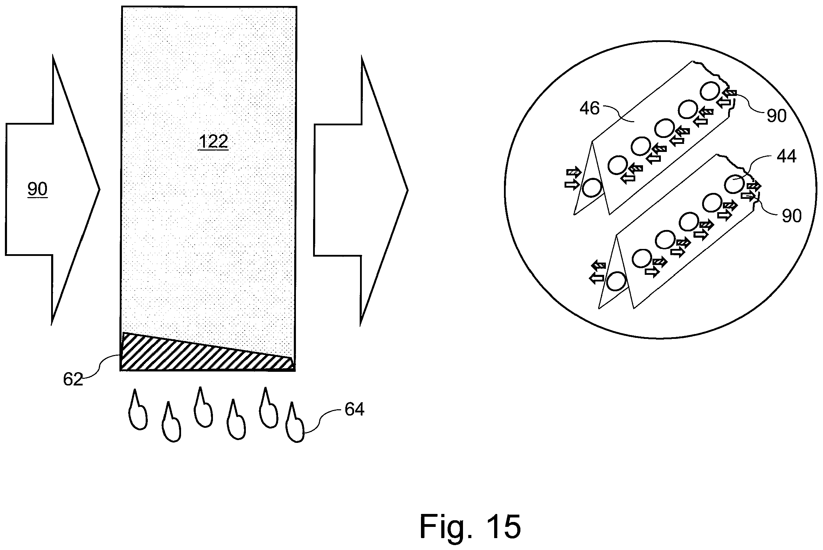

As depicted in figures 5, 6, 9, 10 and 16, the coalescing filter medium 40 is wound horizontally around the corrugated separators 42 which leads to an inflow side 102 for the gas mixture, a so called raw side, and to an outflow side, a so called clean side. Figures 15 to 17 show in detail the filter element 100 in cartridge 120, 122 and a rudimentarily represented fluid path for raw and clean side and drained liquid. Referring to the circled inset of figure 15, flow of the dispersed fluid phase in the gas mixture is represented by the shaded arrow 90, while flow of the continuous phase of the gas mixture is represented by the clear arrow 90.

The gas mixture, e.g. aerosol/air mixture, is directed generally along fluid path 90 from the inflow side 102 against the corrugated separators 42, passes hollow channels formed by the corrugations and flows through openings 44, e.g. vent openings, such as vent holes, of the corrugated separators 42. By passing the hollow channels and by flowing through the vent openings 44 the gas mixture has the first possibility of depositing or separating the dispersed fluid phase.

The angled or oblique orientation of the corrugation depth axis L of the corrugated separators 42 ensures a distribution of the residual gas mixture to the entire surface of the coalescing filter medium 40, which performs the fine separation for the residual gas mixture and thus provides a continuous gas phase or clean gas phase having essentially no dispersed fluid phase.

As depicted in figure 16, the gas mixture flows through the whole longitudinal section of the coalescing filter medium 40 extending along the horizontal axis X of the filter element 100. Specifically, the continuous gas phase is conducted by the corrugated separator 42 in the raw side, in particular by the corrugations as described above, then flows through the longitudinal surfaces 74, 76 of the folds of the coalescing filter medium 40, to the corrugated separator 42 in the clean side, and to an outflow side 104 of the filter element 100. After leaving the coalescence filter element 100, the continuous gas phase is optionally further separated by at least one post cartridge element 7 for separating suspended particles, then flows into the post-separator stage and out of the filter system 200 via filter system outlet 220. Said post cartridge element 7 may be assigned to a further housing section, e.g. to a fifth housing section 24 or to a sixth housing section 25 as depicted in figure 1. Said post cartridge element 7 may be a High-Efficiency Particulate Air/Arrestance Filter, a so called HEPA-Filter. The filter element 100 and the post cartridge element 7 may both be assigned to a main separator stage 3, for example to a multi-stage main separator stage comprising e.g. a first main separator stage 3-1, a second main separator stage 3-2 and a third main separator stage 3-3, as depicted in figure 1 or prior art figure 19. The filter system 200 advantageously does not require multiple coalescence filter media 40 or filter elements 100, as is required in the prior art filter system 200' in figure 19. The filter system 200 may comprise a multi-stage main separator stage 3 comprising the filter element 100, i.e. main separator stage 3-1, and the post cartridge element 7, i.e. main separator stage 3-3.

The filter element 100 may be housed in the fourth housing section 23 or frame 50. The filter element 100 may be fit into housing section 23 or frame 50, or compressed within housing section 23 or frame 50, such that movement of the filter element 100 is minimized when the continuous gas phase is conducted therethrough. Particularly, the coalescing filter medium 40 may be compressed by housing section 23 or frame 50, which in turn compresses corrugated separators 42 between the longitudinal surfaces 74, 76 of the coalescing filter medium 40. Advantageously, compression of the filter element 100 by housing section 23 or frame 50 negates the need to bond the corrugated separator to the fold or to bond the coalescing filter medium 40 to the housing section 23 or frame 50.

A major advantage of the present invention is that more coalescing filter medium 40 can be flowed through at the same time than with the filter mats 40' used in the prior art in the horizontal direction of flow as depicted in figures 18 and 19.

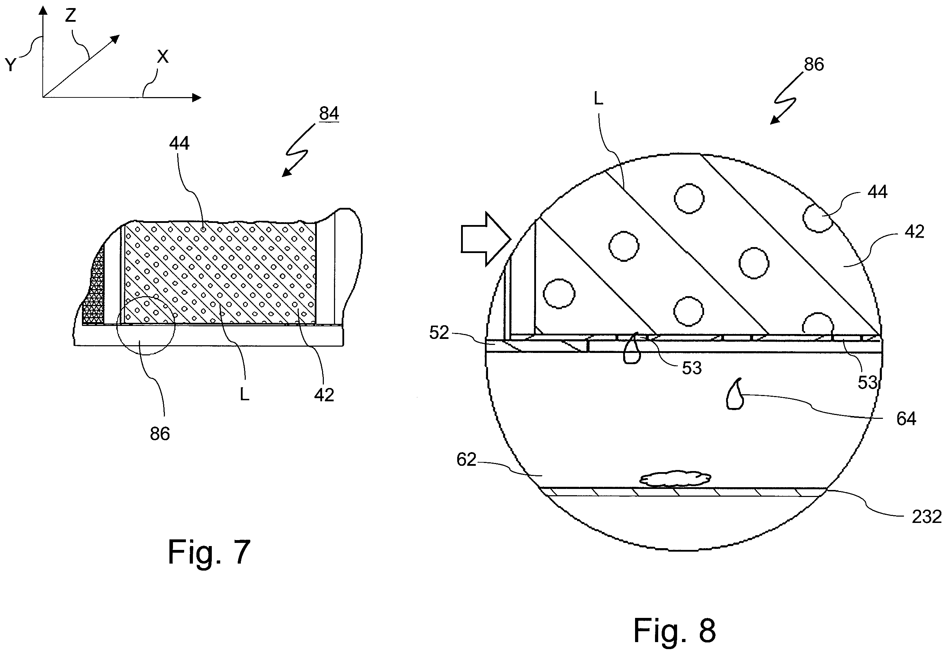

The aerosol mixture separated in this way forms droplets 64 (cf. figure 8, 15 and 17) according to the flow velocity and the separation surfaces of the coalescing filter medium 40. Said droplets 64 move downwards according to gravity, even during the flow of the gas mixture through the coalescing filter medium 40. For the embodiment depicted in figure 16, i.e., the first embodiment of cartridge 120, droplets 64 move according to gravity along the angled corrugated separators 42 located in the raw side, towards drain openings 53. Some droplets 64 may be entrained within the separation surface 74, 76 of the coalescing filter medium 40, such that clean air emerges from the lower separation surface 74, 76 in the clean side. Droplets 64 entrained within the separation surface 74, 76 eventually drip according to gravity onto a separation surface 74, 76 of the coalescing filter medium 40 that is adjacent to the bottom 52 of the frame 50, and towards drain openings 53. At the bottom or ground area 52 of the frame 50 of the cartridge 120, 122, the separated droplets 64 are collected in fluid reservoir 62, passed through or discharged.

Advantageously, the separated droplets are led out of the coalescence filter 100 through drain openings 53 arranged in the bottom 52 of the frame 50 of the cartridge 120, 122 to the outer filter frame side of the bottom 52. These drain openings 53 are formed to pass through or to penetrate the bottom 52 of the frame 50 of the cartridge 120, 122. After having passed the drain openings 53, the separated droplets 64 may be collected in a fluid reservoir 62 of the filter system housing 230 and/or drained out by a fluid outlet 232 of the filter system housing 230.

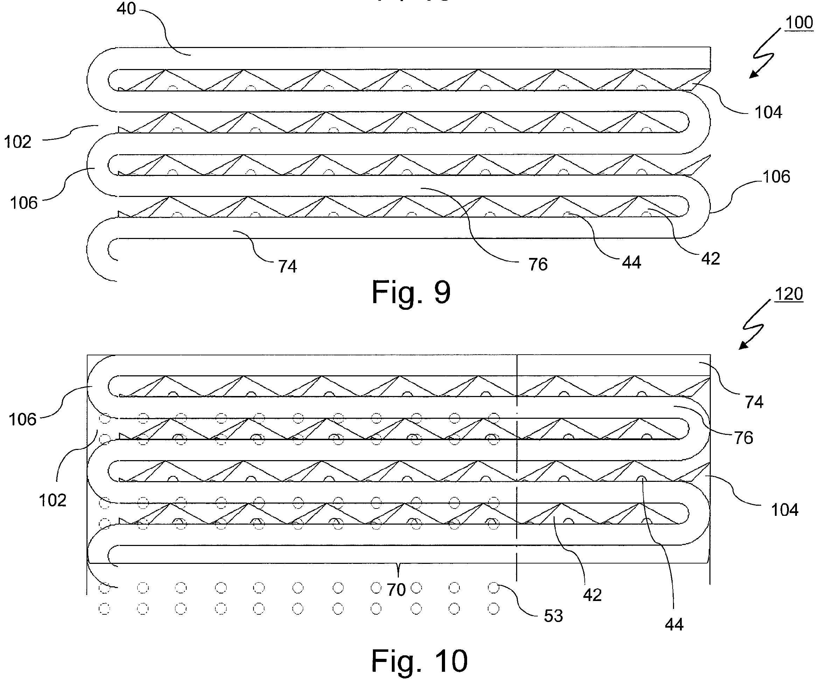

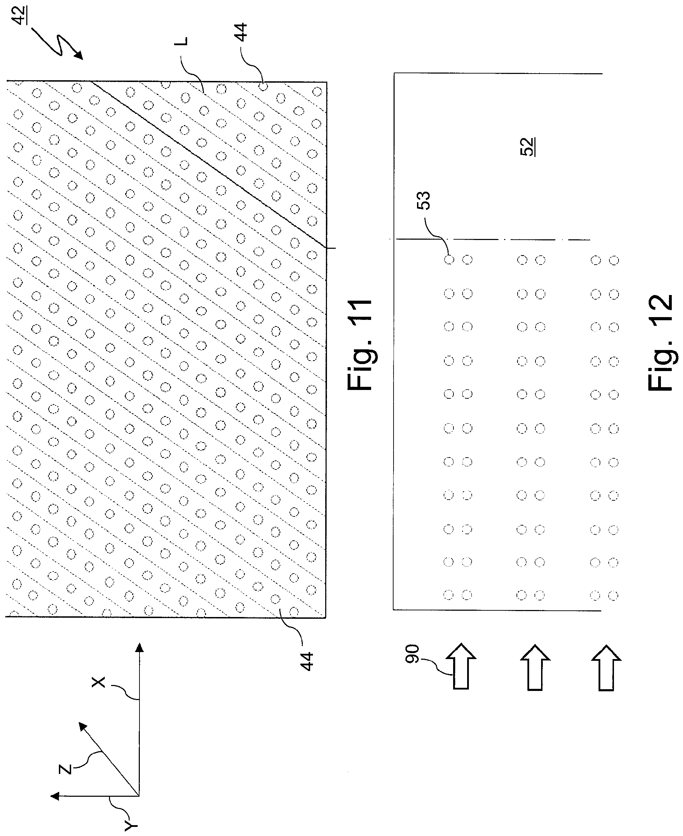

As depicted in figures 10 and 12, the drain openings 53 are advantageously arranged only on the raw side of the coalescing filter medium 40. Thus, an undesirable bypass is prevented.

The coalescing filter medium 40 and the corrugated separators 42 are connected to the drain openings 53 comprising bottom 52, e.g. of the perforated bottom, of the cartridge frame 50 is as follows:
The horizontal coalescence medium 40, which is wrapped around the corrugated separators 42, is piled up in the receiving frame 50 with a defined contact pressure until the cartridge frame 50 is completely filled. It may be started with a layer of coalescence medium 40 followed by the corrugated separator 42. The corrugated separator 42 is preferably centered on the coalescence medium 40, another layer of the coalescence medium 40 is now placed on the corrugated separator 42 separator again, followed by another corrugated separator 42, and so on. The coalescence medium 40 or a part of the coalescence medium 40, e.g. the starting layer of the coalescence medium 40, may be bonded to the frame 50.

As depicted in figure 10, this winding creates open and closed sides of the folds, where the drain openings 53 are advantageously arranged at the frame bottom 52 in the area of the open side, i.e. in the area of the raw side, in the direction of horizontal flow 90.

The drain openings 53 can be essentially even distributed over the frame bottom 52 as depicted in figure 14.

As depicted in figure 12, the drain openings 53 are advantageously only arranged before the last third of the horizontal length of the coalescence medium in the direction of the gas flow 90 or of the outflow side 104 or clean side of the filter element 100. Thus, in the horizontal flow direction, preferably up to one third of the cartridge frame bottom 52 is designed without drain openings 53. This arrangement of the drain openings 53 is preferably adjusted in conjunction with the selected angle of the corrugation depth axis L of the corrugated separators 42.

The drain openings 53 themselves are preferably small, like perforations. However, the size of the drain openings should be large enough to be unsusceptible to dirt.

Independently thereof or in connection therewith, the total area of the drain openings 53 is preferably smaller than the total area of the open sides of the folds at the inflow side 102 of the filter element 100.

The filter system 200 or filter element depicted in figures 1 to 17 is designed for being flowed through by a flow rate of the gas mixture of up to 2000 cubic meter per hour. In an example, the flow rate of the gas mixture may be in the range of about 400 cubic meter per hour to 2000 cubic meter per hour.

The filter system 200 may comprise a differential pressure indicator 60 for indicating pressure differences, a control device 66 for controlling filter system 200 and a ventilator 68 for providing the horizontal gas flow 90. The differential pressure indicator 60 may identify the pressure drop of the raw gas entering the filter system 200, e.g. before the pre-separator stage 5, and the clean gas exiting the filter system 200, e.g. after the main separator stage 3. The differential pressure indicator 60 may feed its data to the control device 66. The control device 66 may control the strength of ventilator 68, based on data received such as from the differential pressure indicator 60, in order to maintain the horizontal gas flow 90 at the desired flow rate of the gas mixture.

The surface area of the coalescing filter medium 40' of the filter system 200' according to prior art, as depicted in figures 18 and 19 amounts approximately 0,75 square meter.

The coalescence filter medium 40 depicted in figures 1 to 17 amounts in the same space 6,5 square meter due to the folding.

In a nutshell, the coalescence filter medium 40 depicted in figures 1 to 17 relates to a horizontal flow coalescing aerosol filter element, mainly designed for separating oil/emulsion aerosols, wherein this coalescence filter medium 40 allows for smaller dimensions, lighter weight and lower manufacturing costs compared to the coalescence filter medium 40' according to prior art.

### Reference Numbers

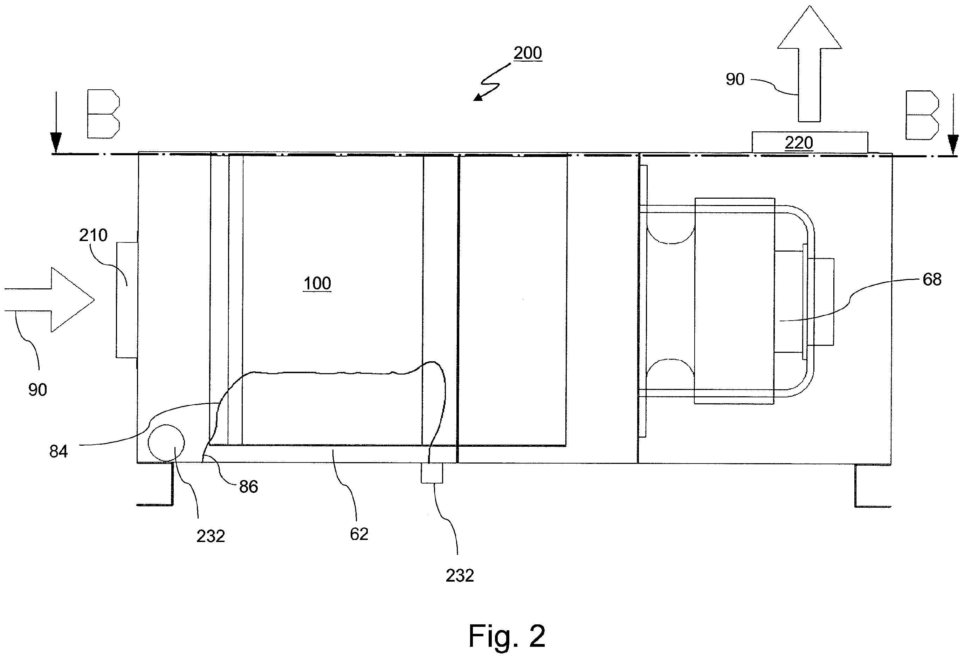

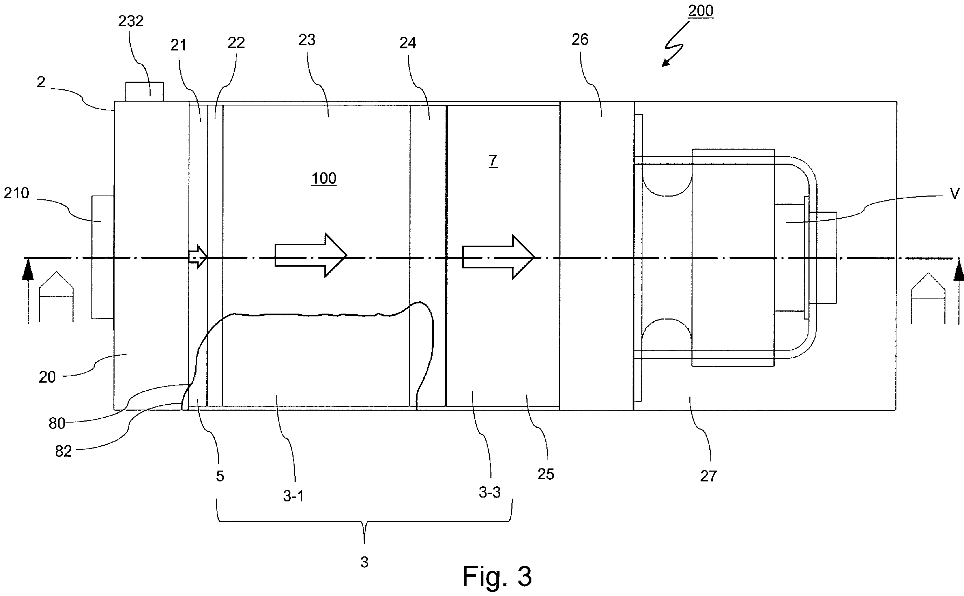

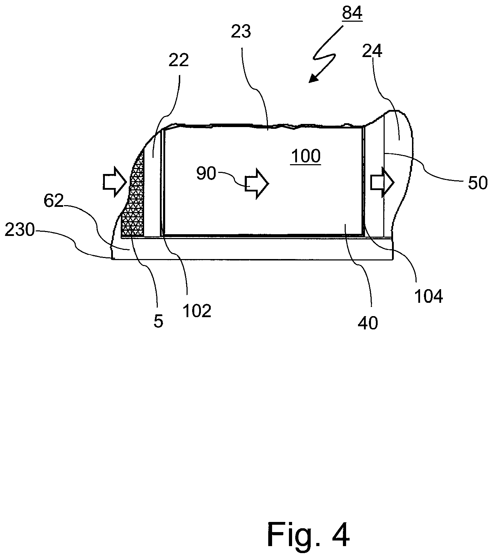

- 3: main separator stage
- 3-1: first main separator stage
- 3-2: further main separator stage, in particular second main separator stage
- 3-3: further main separator stage, in particular third main separator stage
- 5: pre-separator stage, in particular pre-separator element for separating coarse dirt particles, for example metal mash
- 7: post-cartridge stage, in particular post-cartridge element for separating suspended particles, for example H[igh-]Efficiency ]P[articulate ]A[ir/Arrestance] Filter, preferably being assigned to the main separator stage, for example to a second or third main separator stage
- 20: first housing section
- 21: second housing section
- 22: third housing section
- 23: fourth housing section
- 24: fifth housing section
- 25: sixth housing section,
- 26: seventh housing section
- 27: eighth housing section
- 28: ninth housing section
- 40: coalescing filter medium or coalescence filter medium, for example folded multilayered glass fibre medium, for separating a dispersed fluid phase from a continuous phase of a gas mixture, in particular for separating oil aerosol particles from raw gas, for example for separating cooling lubricant aerosol articles and/or release agent aerosol particles from the exhaust air of at least one production machine
- 40': coalescing filter medium or coalescence filter medium, in particular coalescence filter mat, according to prior art used for horizontal flow direction
- 42: corrugated separator, in particular angulated corrugated separator, for example spacer for supporting the longitudinal surfaces 74, 76 of the fold
- 44: corrugated separator opening, in particular vent whole or perforation of the corrugated separator 42
- 46: corrugation of the corrugated separator 21
- 50: frame of the cartridge 120 for receiving the coalescing filter medium 40 and the corrugated separators 42, in particular cuboid frame of the cartridge 120
- 52: ground area or bottom of the frame of the cartridge 120, in particular perforated bottom
- 53: drain opening of the frame 50 for draining fluid out of the cartridge 120, in particular fluid drain
- 60: differential pressure indicator of the filter system 200
- 62: fluid reservoir of the filter system 200, in particular collection volume for receiving separated fluid or liquid
- 64: fluid droplet
- 66: control device of the filter system 200
- 68: ventilator or fan
- 70: length of a fold
- 72: depth of the fold
- 74: longitudinal surface of a fold
- 76: further longitudinal surface of a fold
- 80: area adjacent to the ground area of the frame 52 of the cartridge 120 of figure 3, said area 80 is depicted in Figure 5 in detail
- 82: area adjacent to the ground area of the frame 52 of the cartridge 120 of figure 3, said area 82 depicted in Figure 6 in detail
- 84: area adjacent to the ground area of the frame 52 of the cartridge 120 of figure 2, said area 84 is depicted in Figure 4 in detail
- 86: area adjacent to the ground area of the frame 52 of the cartridge 120 of figure 2, said area 86 is depicted in Figures 7 and 10 in detail
- 90: flow of gas mixture or fluid path
- 100: filter element, in particular coalescing filter element
- 102: inflow side of the filter element 100
- 104: outflow side of the filter element 100
- 106: fold tip
- 120: cartridge, in particular filter cassette, first embodiment cf. Fig. 1
- 122: cartridge, in particular filter cassette, second embodiment cf. Fig. 14
- 200: filter system, in particular separator, e.g. coalescing aerosol filter system, for separating a dispersed fluid phase from a continuous phase of a gas mixture, in particular for separating oil aerosol particles from raw gas, in particular from the exhaust air of at least one production machine, in particular of a cutting production machine
- 200': horizontal flow coalescing filter system according to prior art cf. figures 18 and 19
- 210: filter system inlet, in particular raw gas inlet
- 220: filter system outlet, in particular clean gas outlet
- 230: housing of the filter system 200
- 232: fluid outlet of the filter system housing 230, in particular of a ground area of the filter system housing 230
- L: corrugation depth axis, in particular crest line of the sinusoidal or zig-zag formed corrugation, e.g. crest line of the hollow channel formed by the corrugation
- X: horizontal axis of the filter element 100
- Y: vertical axis of the filter element 100
- Z: depth axis or sagittal axis of the filter element 100

## Claims

1. Filter element (100) adapted to separate a dispersed fluid phase from a continuous phase of a gas mixture, the filter element (100) comprising
- a horizontal axis (X), a vertical axis (Y) and a depth axis (Z) perpendicularly to the each other,
- a coalescing filter medium (40) being folded in a sinusoidal or zigzagged manner forming at least one fold having a length (70) and a depth (72), and
- at least one corrugated separator (42) comprising sinusoidal or zigzag-shaped corrugations (46) located in between adjacent longitudinal surfaces (74, 76) of the fold, wherein the heights of the corrugations extend perpendicularly to the length (70) of the fold and wherein each corrugation (46) comprises a corrugation depth axis (L) extending across the depth (72) of the fold, **characterized in, that**
- the corrugation depth axis (L) is disposed at an angle offset to the horizontal axis (X) as well as offset to the vertical axis (Y) as well as offset to the depth axis (Z) and
- the longitudinal surfaces (74, 76) of the fold extend along the horizontal axis (X) of the filter element (100) from an inflow side (102) of the filter element (100) to an outflow side (104) of the filter element (100).

2. Filter element according to claim 1, **characterized in that** the corrugation depth axis (L) is disposed at an angle of about 20 degrees to about 70 degrees, in particular of about 25 degrees to about 55 degrees, for example of about 30 degrees, to the vertical axis (Y) of the filter element (100).

3. Filter element according to claim 1 or 2, **characterized in that** the corrugations (46) are comprising at least one corrugated separator opening (44), in particular at least one perforation, being designed for being streamed through by the gas mixture streaming along the horizontal axis (X) of the filter element (100).

4. A filter element according to at least one of claims 1 to 3, **characterized in that** each corrugation (46) extends across the depth (72) of the fold in such way, that at least one hollow channel is provided through the depth (72) of the fold, wherein the corrugation depth axis (L) of the corrugation (46) is disposed at the angle for enhancing the fluid being separated from the gas mixture to be drained by gravity.

5. A filter element according to at least one of claims 1 to 4, **characterized in that** the longitudinal surfaces (74, 76) of the fold extend between the
- horizontal filter element axis (X) and the depth filter element axis (Z) or
- horizontal filter element axis (X) and the vertical filter element axis (Y).

6. A filter element according to at least one of claims 1 to 5, **characterized in that** the filter element (100) is designed for being flowed through by a flow rate of the gas mixture of up to 2000 cubic meter per hour, for example by a flow rate of the gas mixture in the range of about 400 cubic meter per hour to 2000 cubic meter per hour.

7. A filter element according to at least one of claims 1 to 6, **characterized in that**
- the corrugated separators (42) comprise, in particular essentially consist of, at least one metal material, in particular at least one material comprising aluminum, e.g. steel, such as unalloyed structural steel of grade S235, and/or at least one combustible material, in particular combustible synthetic material and/or combustible plant fibre material, e.g. cellulose fibre material, and/or
- the coalescing filter medium (40) comprises, in particular essentially consists of, at least one fibrous material, such as at least one synthetic fibre material and/or at least one glass fibre material and/or at least one plant fibre material.

8. A cartridge (120; 122) comprising at least one frame (50) and at least one filter element received in the at least one frame (50), the filter element comprising at least one coalescing filter medium (40) with at least one corrugated separator (42) integrated into at least one fold of the coalescing filter medium (40), **characterized in that**
- the filter element is a filter element (100) according to at least one of claims 1 to 7 and
- the frame (50) comprises an essentially horizontal ground area (52) comprising at least one frame drain opening (53) for draining fluid being separated by the filter element (100).

9. Cartridge according to claim 8, **characterized in that** the at least one filter element (100) is held within the frame (50) by means of a press fit, such that the at least one corrugated separator (42) is compressed between the fold of the coalescing filter medium (40).

10. Cartridge according to claim 8 or 9, **characterized in that** the coalescing filter medium (40) comprises at least one gas mixture inlet area at the inflow side (102) of the filter element (100), wherein the total area of the at least one frame drain opening (53) is smaller than the total area of the at least one gas mixture inlet.

11. The cartridge according to at least one of claims 8 to 10, **characterized in that**
- the fold comprises longitudinal surfaces (74, 76) being connected by a fold tip (106), wherein the area between two longitudinal surfaces (74, 76) being connected by a fold tip (106) facing the inflow side (102) of the filter element 100 forms the clean side of the coalescing filter medium (40) and the area between two longitudinal surfaces (74, 76) being connected by a fold tip (106) facing the outflow side (104) of the filter element 100 of the filter element 100 forms the raw side of the coalescing filter medium (40), and
- the frame drain opening (53) is only arranged in the area of the raw side of the coalescing filter medium (40).

12. Cartridge according to at least one of claims 8 to 11, **characterized in that** the frame drain opening (53) is arranged in flow direction of the gas mixture only in the first two thirds of the area of the horizontal ground area (52).

13. Filter system (200) comprising a pre-separator stage (5), a cartridge (120; 122) and a housing (230) to house the pre-separator stage (5) and the cartridge (120; 122), **characterized in that** the cartridge (120; 122) is a cartridge (120; 122) according to at least one of claims 8 to 12, wherein a continuous phase of a gas mixture comprising a dispersed fluid phase that entered a filter system inlet (210) of the housing (230) flows horizontally through the pre-separator stage (5) and through the cartridge (120; 122) by a horizontal flow provided by a ventilator (68), and a continuous gas phase having essentially no dispersed fluid phase exits the filter system (200) through an filter system outlet (220) of the housing (230).

14. Use of the filter element of at least one of claims 1 to 7 in a cartridge (120; 122) of at least one of claims 8 to 12 or a filter system (200) according to claim 13.

## Patentansprüche

1. Filterelement (100), das zum Trennen einer dispergierten Fluidphase von einer kontinuierlichen Phase eines Gasgemisches geeignet ist, das Filterelement (100) umfassend
- eine Horizontalachse (X), eine Vertikalachse (Y) und eine Tiefenachse (Z), die senkrecht zueinander verlaufen,
- ein Koaleszenzfiltermedium (40), das sinusförmig oder zickzackförmig gefaltet ist und mindestens eine Falte mit einer Länge (70) und einer Tiefe (72) bildet, und
- mindestens einen wellenförmigen Abscheider (42), der sinusförmige oder zickzackförmige Wellen (46) umfasst, die sich zwischen benachbarten Längsflächen (74, 76) der Falte befinden, wobei die Höhen der Wellen senkrecht zur Länge (70) der Falte verlaufen und wobei jede Welle (46) eine sich über die Tiefe (72) der Falte erstreckende Wellentiefenachse (L) umfasst, **dadurch gekennzeichnet, dass**
- die Wellentiefenachse (L) sowohl winkelversetzt zur Horizontalachse (X) als auch winkelversetzt zur Vertikalachse (Y) als auch winkelversetzt zur Tiefenachse (Z) angeordnet ist und
- sich die Längsflächen (74, 76) der Falte entlang der Horizontalachse (X) des Filterelements (100) von einer Anströmseite (102) des Filterelements (100) zu einer Abströmseite (104) des Filterelements (100) erstrecken.

2. Filterelement nach Anspruch 1, **dadurch gekennzeichnet, dass** die Wellentiefenachse (L) in einem Winkel von ungefähr 20 Grad bis ungefähr 70 Grad, insbesondere von ungefähr 25 Grad bis ungefähr 55 Grad, zum Beispiel von ungefähr 30 Grad, zur Vertikalachse (Y) des Filterelements (100) angeordnet ist.

3. Filterelement nach Anspruch 1 oder 2, **dadurch gekennzeichnet, dass** die Wellen (46) mindestens eine wellenförmige Abscheideröffnung (44), insbesondere mindestens eine Perforierung ausgelegt für den durchströmenden Gasgemischstrom entlang der Horizontalachse (X) des Filterelements (100) umfassen.

4. Filterelement nach mindestens einem der Ansprüche 1 bis 3, **dadurch gekennzeichnet, dass** sich jede Welle (46) derart über die Tiefe (72) der Falte erstreckt, dass mindestens ein Hohlkanal durch die Tiefe (72) der Falte vorgesehen ist, wobei die Wellentiefenachse (L) der Welle (46) in einem Winkel angeordnet ist, der die Abscheidung des Fluids aus dem Gasgemisch durch Schwerkraft optimiert.

5. Filterelement nach mindestens einem der Ansprüche 1 bis 4, **dadurch gekennzeichnet, dass** sich die Längsflächen (74, 76) der Falte zwischen der
- Horizontalfilterelementachse (X) und der Tiefenfilterelementachse (Z) oder der
- Horizontalfilterelementachse (X) und der Vertikalfilterelementachse (Y) erstrecken.

6. Filterelement nach mindestens einem der Ansprüche 1 bis 5, **dadurch gekennzeichnet, dass** das Filterelement (100) für eine Durchflussmenge des Gasgemisches bis zu 2000 Kubikmeter pro Stunde ausgelegt ist, zum Beispiel für eine Durchflussmenge des Gasgemisches im Bereich von ungefähr 400 Kubikmeter pro Stunde bis zu 2000 Kubikmeter pro Stunde.

7. Filterelement nach mindestens einem der Ansprüche 1 bis 6, **dadurch gekennzeichnet, dass**
- die wellenförmigen Abscheider (42) mindestens ein metallisches Material, insbesondere mindestens ein Aluminium enthaltendes Material, z.B. Stahl, wie unlegierter Baustahl der Güte S235, und/oder mindestens ein brennbares Material, insbesondere brennbares Kunststoffmaterial und/oder brennbares Pflanzenfasermaterial, z.B. Zellulosefasermaterial, umfassen, insbesondere im Wesentlichen daraus bestehen, und/oder
- das Koaleszenzfiltermedium (40) mindestens ein Fasermaterial, wie mindestens ein synthetisches Fasermaterial und/oder mindestens ein Glasfasermaterial und/oder mindestens ein Pflanzenfasermaterial umfasst, insbesondere im Wesentlichen daraus beseht.

8. Kartusche (120; 122), umfassend mindestens einen Rahmen (50) und mindestens ein in dem mindestens einen Rahmen (50) aufgenommenes Filterelement, wobei das Filterelement mindestens ein Koaleszenzfiltermedium (40) mit mindestens einem wellenförmigen Abscheider (42) umfasst, der in mindestens eine Falte des Koaleszenzfiltermediums (40) integriert ist, **dadurch gekennzeichnet, dass**
- das Filterelement ein Filterelement (100) nach mindestens einem der Ansprüche 1 bis 7 ist und
- der Rahmen (50) einen im Wesentlichen horizontalen Bodenbereich (52) umfasst, der mindestens eine Rahmenablauföffnung (53) zum Ablassen von durch das Filterelement (100) abgeschiedenem Fluid umfasst.

9. Kartusche nach Anspruch 8, **dadurch gekennzeichnet, dass** das mindestens eine Filterelement (100) innerhalb des Rahmens (50) mittels einer Presspassung gehalten wird, so dass der mindestens eine wellenförmige Abscheider (42) zwischen der Falte des Koaleszenzfiltermediums (40) zusammengedrückt wird.

10. Kartusche nach Anspruch 8 oder 9, **dadurch gekennzeichnet, dass** das Koaleszenzfiltermedium (40) mindestens einen Gasgemischeinlassbereich auf der Anströmseite (102) des Filterelements (100) umfasst, wobei die Gesamtfläche der mindestens einen Rahmenablassöffnung (53) kleiner ist als die Gesamtfläche des mindestens einen Gasgemischeinlasses.

11. Kartusche nach mindestens einem der Ansprüche 8 bis 10, **dadurch gekennzeichnet, dass**
- die Falte Längsflächen (74, 76) umfasst, die durch eine Faltenspitze (106) verbunden sind, wobei der Bereich zwischen zwei Längsflächen (74, 76), die durch eine Faltenspitze (106) verbunden sind, die der Anströmseite (102) des Filterelements (100) gegenüberliegt, die Reinseite des Koaleszenzfiltermediums (40) bildet und der Bereich zwischen zwei Längsflächen (74, 76), die durch eine Faltenspitze (106) verbunden sind, die der Abströmseite (104) des Filterelements (100) gegenüberliegt, die Rohseite des Koaleszenzfiltermediums (40) bildet, und
- die Rahmenablauföffnung (53) nur im Bereich der Rohseite des Koaleszenzfiltermediums (40) angeordnet ist.

12. Kartusche nach mindestens einem der Ansprüche 8 bis 11, **dadurch gekennzeichnet, dass** die Rahmenablauföffnung (53) in Strömungsrichtung des Gasgemisches nur in den ersten zwei Dritteln der Fläche der horizontalen Bodenfläche ("52) angeordnet ist.

13. Filtersystem (200), umfassend eine Vorabscheiderstufe (5), eine Kartusche (120; 122) und ein Gehäuse (230) zur Aufnahme der Vorabscheiderstufe (5) und der Kartusche (120; 122), **dadurch gekennzeichnet, dass** die Kartusche (120; 122) eine Kartusche (120; 122) nach mindestens einem der Ansprüche 8 bis 12 ist, wobei eine kontinuierliche Phase eines Gasgemisches, das eine dispergierte Fluidphase umfasst, die in einen Filtersystemeinlass (210) des Gehäuses (230) eingetreten ist, horizontal durch die Vorabscheiderstufe (5) und durch die Kartusche (120; 122) mittels einer horizontalen Strömung strömt, die durch einen Ventilator (68) erzeugt wird, und eine kontinuierliche Gasphase, die im Wesentlichen keine dispergierte Fluidphase aufweist, das Filtersystem (200) durch einen Filtersystemauslass (220) des Gehäuses (230) verlässt.

14. Verwendung des Filterelements nach mindestens einem der Ansprüche 1 bis 7 in einer Kartusche (120; 122) nach mindestens einem der Ansprüche 8 bis 12 oder einem Filtersystem (200) nach Anspruch 13.

## Revendications

1. Élément filtrant (100) adapté pour séparer une phase fluide dispersée d'une phase continue d'un mélange gazeux, l'élément filtrant (100) comprenant
- un axe horizontal (X), un axe vertical (Y) et un axe de profondeur (Z) perpendiculaires les uns par rapport aux autres,
- un milieu filtrant de coalescence (40) étant plié de manière sinusoïdale ou en zigzag formant au moins un pli ayant une longueur (70) et une profondeur (72), et
- au moins un séparateur ondulé (42) comprenant des ondulations (46) sinusoïdales ou en forme de zigzag localisées entre des surfaces longitudinales (74, 76) adjacentes du pli, dans lequel les hauteurs des ondulations s'étendent perpendiculairement à la longueur (70) du pli et dans lequel chaque ondulation (46) comprend un axe de profondeur d'ondulation (L) s'étendant à travers la profondeur (72) du pli, **caractérisé en ce que**
- l'axe de profondeur d'ondulation (L) est disposé selon un angle décalé par rapport à l'axe horizontal (X) ainsi que décalé par rapport à l'axe vertical (Y) ainsi que décalé par rapport à l'axe de profondeur (Z) et que
- les surfaces longitudinales (74, 76) du pli s'étendent le long de l'axe horizontal (X) de l'élément filtrant (100) à partir d'un côté d'arrivée (102) de l'élément filtrant (100) jusqu'à un côté de sortie (104) de l'élément filtrant (100).

2. Élément filtrant selon la revendication 1, **caractérisé en ce que** l'axe de profondeur d'ondulation (L) est disposé selon un angle d'environ 20 degrés à environ 70 degrés, en particulier d'environ 25 degrés à environ 55 degrés, par exemple d'environ 30 degrés, par rapport à l'axe vertical (Y) de l'élément filtrant (100).

3. Élément filtrant selon la revendication 1 ou 2, **caractérisé en ce que** les ondulations (46) comprennent au moins une ouverture de séparateur ondulé (44), notamment au moins une perforation, conçue pour être traversée par le mélange gazeux s'écoulant le long de l'axe horizontal (X) de l'élément filtrant (100).

4. Élément filtrant selon au moins l'une quelconque des revendications 1 à 3, **caractérisé en ce que** chaque ondulation (46) s'étend à travers la profondeur (72) du pli d'une manière telle qu'au moins un canal creux est prévu à travers la profondeur (72) du pli, dans lequel l'axe de profondeur de l'ondulation (L) de l'ondulation (46) est disposé à l'angle permettant d'améliorer la séparation du fluide du mélange gazeux pour qu'il soit drainé par gravité.

5. Élément filtrant selon au moins l'une quelconque des revendications 1 à 4, **caractérisé en ce que** les surfaces longitudinales (74, 76) du pli s'étendent entre
- l'axe horizontal d'élément filtrant (X) et l'axe de profondeur d'élément filtrant (Z) ou
- l'axe horizontal d'élément filtrant (X) et l'axe vertical d'élément filtrant (Y).

6. Élément filtrant selon au moins l'une quelconque des revendications 1 à 5, **caractérisé en ce que** l'élément filtrant (100) est conçu pour être parcouru par un débit du mélange gazeux allant jusqu'à 2000 mètres cubes par heure, par exemple par un débit du mélange gazeux dans la plage d'environ 400 mètres cubes par heure à 2000 mètres cubes par heure.

7. Élément filtrant selon au moins l'une quelconque des revendications 1 à 6, **caractérisé en ce que**
- les séparateurs ondulés (42) comprennent au moins un matériau métallique, notamment au moins un matériau comprenant de l'aluminium, par exemple de l'acier, tel que de l'acier de construction non allié de qualité S235, et/ou au moins un matériau combustible, notamment un matériau synthétique combustible et/ou un matériau en fibre végétale combustible, par exemple un matériau en fibre cellulosique, notamment sont sensiblement constitués de ces matériaux, et/ou
- le milieu filtrant de coalescence (40) comprend au moins un matériau fibreux, tel qu'au moins un matériau en fibre synthétique et/ou au moins un matériau en fibre de verre et/ou au moins un matériau en fibre végétale, notamment est constitué sensiblement de ces matériaux.

8. Cartouche (120 ; 122) comprenant au moins un cadre (50) et au moins un élément filtrant logé dans le cadre (50), au moins au nombre d'un, l'élément filtrant comprenant au moins un milieu filtrant de coalescence (40) avec au moins un séparateur ondulé (42) intégré dans au moins un pli du milieu filtrant de coalescence (40), **caractérisée en ce que**
- l'élément filtrant est un élément filtrant (100) selon au moins l'une quelconque des revendications 1 à 7 et
- le cadre (50) comprend une zone de base (52) sensiblement horizontale comprenant au moins une ouverture de drainage de cadre (53) destinée au drainage d'un fluide séparé par l'élément filtrant (100).

9. Cartouche selon la revendication 8, **caractérisée en ce que** l'élément filtrant (100), au moins au nombre d'un, est maintenu au sein du cadre (50) au moyen d'un ajustement serré, de telle sorte que le séparateur ondulé (42), au moins au nombre d'un, est comprimé entre le pli du milieu filtrant de coalescence (40).

10. Cartouche selon la revendication 8 ou 9, **caractérisée en ce que** le milieu filtrant de coalescence (40) comprend au moins une zone d'entrée de mélange gazeux au niveau du côté d'arrivée (102) de l'élément filtrant (100), dans lequel l'aire totale de l'ouverture de drainage de cadre (53), au moins au nombre d'une, est plus petite que l'aire totale de l'entrée de mélange gazeux, au moins au nombre d'une.

11. Cartouche selon au moins l'une quelconque des revendications 8 à 10, **caractérisée en ce que**
- le pli comprend des surfaces longitudinales (74, 76) reliées par une pointe de pli (106), dans laquelle la zone entre deux surfaces longitudinales (74, 76) reliées par une pointe de pli (106) faisant face au côté d'arrivée (102) de l'élément filtrant (100) forme le côté pur du milieu filtrant de coalescence (40) et la zone entre deux surfaces longitudinales (74, 76) reliées par une pointe de pli (106) faisant face au côté de sortie (104) de l'élément filtrant (100) forme le côté brut du milieu filtrant de coalescence (40), et
- l'ouverture de drainage de cadre (53) est agencée uniquement dans la zone du côté brut du milieu filtrant de coalescence (40).

12. Cartouche selon au moins l'une quelconque des revendications 8 à 11, **caractérisée en ce que** l'ouverture de drainage de cadre (53) est agencée dans une direction d'écoulement du mélange gazeux uniquement dans les premiers deux tiers de la surface de la zone de base horizontale ("52).

13. Système de filtre (200) comprenant un étage de pré-séparateur (5), une cartouche (120; 122) et un boîtier (230) pour loger l'étage de pré-séparateur (5) et la cartouche (120; 122), **caractérisé en ce que** la cartouche (120; 122) est une cartouche (120; 122) selon au moins l'une quelconque des revendications 8 à 12, dans lequel une phase continue d'un mélange gazeux comprenant une phase fluide dispersée qui est entrée dans une entrée de système de filtre (210) du logement (230) s'écoule horizontalement à travers l'étage de pré-séparateur (5) et à travers la cartouche (120; 122) par un écoulement horizontal fourni par un ventilateur (68), et une phase gazeuse continue n'ayant essentiellement pas de phase fluide dispersée quitte le système de filtre (200) à travers une sortie de système de filtre (220) du boîtier (230).

14. Utilisation de l'élément filtrant selon au moins l'une quelconque des revendications 1 à 7 dans une cartouche (120; 122) selon au moins l'une des revendications 8 à 12 ou un système de filtre (200) selon la revendication 13.
